# EUROPEAN PATENT SPECIFICATION

(11) **EP 2 836 292 B1**
(45) Date of publication and mention of the grant of the patent: **01.06.2022**
(21) Application number: 13731881.2
(22) Date of filing: 15.04.2013
(51) Int. Cl.: B01F 21/00, G01F 11/28, B01F 25/30, C02F 1/68

(54) **DEVICE FOR DOSING SOLID PRODUCTS IN WATERWORKS**
VORRICHTUNG ZUM DOSIEREN FESTER PRODUKTE IN WASSERANLAGEN
DISPOSITIF PERMETTANT DE DOSER DES PRODUITS SOLIDES DANS DES INSTALLATIONS D'ADDUCTION ET DE DISTRIBUTION D'EAU

(30) Priority: 13.04.2012 IT FI20120077
(43) Date of publication of application: 18.02.2015
(73) Proprietor: Aquaclinic S.r.l., 53100 Siena (IT)
(72) Inventor: PIANIGIANI, Daniele, I-50063 Figline Valdarno (IT); SOZZI, Mauro, I-53034 Colle Di Val D'elsa (IT); GALGANI, Alessandro, I-53100 Siena (IT)
(74) Representative: Contadin, Giorgio
(86) International application number: PCT/IB2013/052981
(87) International publication number: WO 2013/153543

(56) References cited:
- WO-A1-2009/063160
- WO-A1-2010/043940
- US-A- 4 548 228
- US-A- 5 100 542
- None

## Description

### Field of the invention

The present invention relates to the field of waterwork equipment.

### Background of the invention

As is known in waterworks, the term meaning swimming pools, crop or farming tanks (for example algae or fish farming), vats, small ponds and similar water reserves, it is often necessary to add various products to purify and disinfect the waters themselves or for growing crops or feeding the farmed animals.

These products, which can be in liquid or solid form (for example powders or tablets), are normally added using open containers in which the necessary mixtures are prepared then poured into the ponds or the into the water supply conduits to which they pertain.

This means of operating necessarily entails accidental spillage of the products or of the relevant solutions, which can often be caustic, corrosive or toxic, at least in the high initial concentrations, causing non-negligible problems for both the operators and the environment.

Various solutions have been proposed to overcome the above-mentioned problems, yet none of these solutions have proved truly satisfactory in that the known devices do not guarantee that the products to be added will come into contact with the water while they remain in their introduction containers, as for example may occur in the case of changes in system pressure that result in a rise in the water in the product supply conduits, which can cause various problems (up to the blocking of the conduits themselves), in particular in the cases in which are used.

Known devices of the above-mentioned type, and that therefore present the above-described drawbacks, are for example described in WO 2010/043940, US 5,100,542 however it is clear that in this case the intended purpose is not achieved, particularly as regards solid additives.

The advantage of making available an equipment that allows the desired products to be introduced directly into the hydraulic circuit so as to minimise losses and also, where necessary, allow a more accurate dosage of the added products and, above all, prevent the products that are to be introduced into the supply circuit from coming into contact with the water in an undesirable manner, is therefore clear.

### Brief description of the drawings

Figure 1 is a schematic representation of a front view of the equipment according to the invention (already installed).

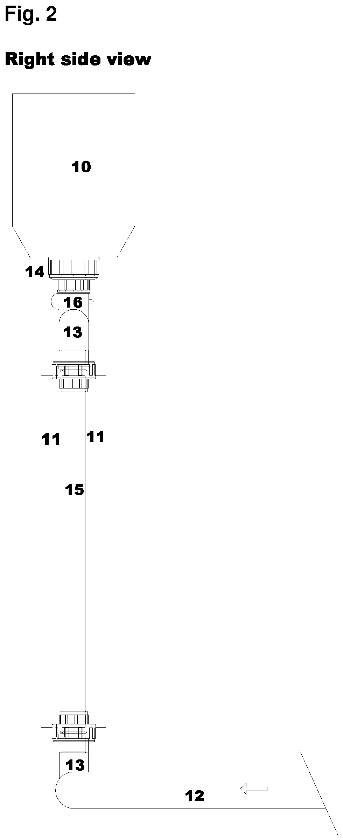

Figure 2 shows a side view of the equipment according to figure 1
Figure 3 schematically shows a particular example of equipment according to the invention, in which the pressure is obtained by taking advantage of the Venturi effect.

### Summary of the invention

The present invention relates to an equipment that allows the required additives to be dosed directly into a hydraulic circuit.

### Detailed description of the invention

The present invention allows the above-mentioned problems to be overcome thanks to an equipment that allows mixing of solid products directly in the supply conduits of the waterworks as defined above.

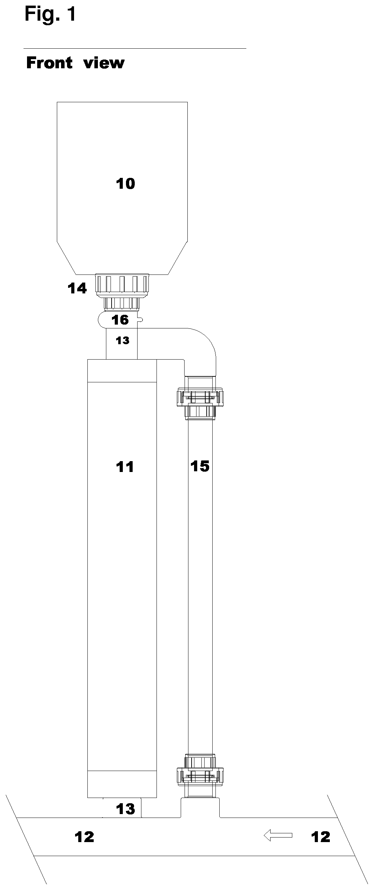

As can be seen from figure 1, the invention consists of a device comprising a hollow column 11, which is vertically and perpendicularly arranged to the supply circuit of the main waterwork 12 and is connected thereto, with the lower part thereof, by means of suitable water-tight engaging means 14, such as threaded joints equipped with suitable gaskets for example.

Column 11 can be of any shape and size but will preferably consist of a cylindrical pipe.

At the end opposite to the one engaged in the conduit of the main circuit 12, thus at its upper end, the column 11 has a sleeve 13 that is equipped with engaging means 14 (analogous to those previously described) that allows the column 11 to be connected to a container 10 containing the products to be added to the fluid flowing in the main supply conduit 12.

Again at the top of the column 11, inserted into the sleeve 13, in the part immediately below the container 10 of the products to be added, is located an electrically or manually controlled dosing valve 16, with the aim of dosing desired amounts of the products introduced into the column 11, that from the column, will subsequently reach the main conduit 12.

Said valve will in turn be connected to a control system (not shown in the drawing), which will open it for the time necessary to allow the product amounts to pass. Lastly, on the supply circuit 12 are then installed equipment intended for introducing pressurised air with the aim of lowering the level of water contained in the column 11, which inevitably rises in relation to the introduction of the products to be mixed that are introduced into the valve or due to accidental causes or in general to sudden changes in pressure that are produced within the hydraulic piping system, thus restoring the optimal operating levels.

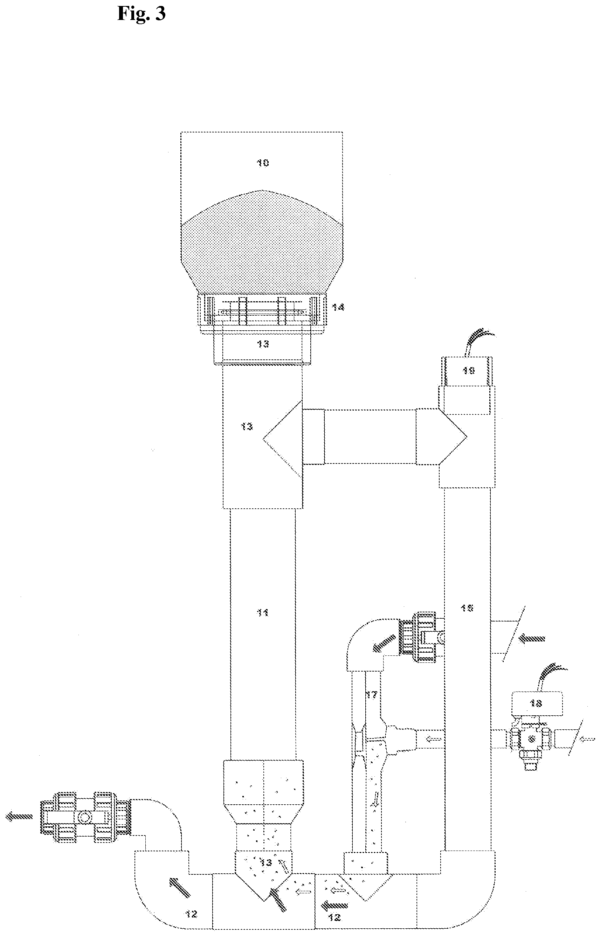

The introduction of pressurised air can also be obtained by taking advantage of the Venturi effect as shown in more detail in Figure 3.

In this case, as can be seen from Figure 3, a pipe 15, arranged in parallel and in communication with column 11, connects the main water supply conduit 12 with the top of the column 11 immediately downstream of the dosing valve In column 15, communicating with the column 11, are positioned of electronic level probes 19 that control the level that the water reaches in column 11.

The air vacuum that is created in the column 11 and 15 should be maintained in that the consumption of chemical products in their container 10 will be replaced in equal volume by the air present in the columns 11 and 15, making the water of the circuit 12 rise.

In the case in which the water level in the column 11 rises, the probes 19 placed in the column 15, communicating with the column 11, will send a signal to the control system which will open the solenoid valve 18, which through the Venturi system 17, positioned in the circuit 12 will allow the air to enter the circuit.

The water in which is the water that has reached the height of the intersection with the column 11 is dispersed, will slow down, the pipe having a greater dimension; and the air will, due to gravity, rise within the column 11, making the water level reduce automatically.

This system allows a constant air vacuum within the column 11.

The operation of the device according to the invention is thus very simple:
the containers of the products to be mixed are applied to the engagement means arranged at the upper end of the column 11 and, at the controlled opening of the dosing valve, the products descend by gravity into column 11, mixing with the liquid flowing at the opposite end of the column towards the respective waterwork, and the air compressing upwards creates a vacuum that remains constant. The rising of liquid for discharges of external air into column 11 is automatically recorded by level probes that would arrange to restore optimal conditions in the manner described above.

## Claims

1. A device for adding solid additives into a hydraulic circuit comprising a container for said additives (10), connected to a hollow column (11), which is vertically and perpendicularly arranged to the supply circuit of the main waterwork (12) and is connected thereto, with the lower part thereof, by means of suitable engaging means (14), so that said solid additives descends by gravity into said column (11) and directly towards or into said supply circuit of the main waterwork (12) where they mix with a liquid flowing in said supply circuit of the main waterwork (12) **characterised in that** it comprises equipment capable of introducing pressurised air into the upper part of said column (11), so as to lower the level of water contained in said column (11) so as to prevent contact between the water and said container (10) wherein the device further comprises a level probe (19) sending a signal of the level reached by said water into said column (11) to a control system.

2. Device according to claim 1, wherein said column (11) can be of any shape and size, preferably consisting of a cylindrical pipe.

3. Device according to claims 1 and 2, wherein at the upper end of the column (11) is a sleeve (13) equipped with engaging means (14) that allow the column (11) to be connected to the container (10) containing the products to be added to the fluid flowing in the main supply conduit of the waterwork (12).

4. Device according to claim 3, wherein at the top of the column (11), inserted into the sleeve (13), in the part immediately below the container (10), is an electrically or manually controlled dosing valve (16).

5. Device according to claim 1, wherein said equipment for introducing pressurised air consists of a pipe (15), arranged parallel to and in communication with the column (11), which connects the main water supply conduit (12) with the top of the column (11), immediately downstream of the dosing valve.

6. Device according to claim 5, wherein air is introduced by taking advantage of the Venturi effect.

## Patentansprüche

1. Vorrichtung zur Zugabe von festen Zusätzen in einen hydraulischen Kreislauf, die einen Behälter für die Zusätze (10) umfasst, der mit einer hohlen Säule (11) verbunden ist, die vertikal und senkrecht zum Versorgungskreislauf des Hauptwasserwerks (12) angeordnet ist und mit dem unteren Teil desselben durch geeignete Eingriffsmittel (14) verbunden ist, so dass die festen Zusätze durch die Schwerkraft in die Säule (11) und direkt zum oder in den Versorgungskreislauf des Hauptwasserwerks (12) hinabsinken, wo sie sich mit einer im Versorgungskreislauf des Hauptwasserwerks (12) fließenden Flüssigkeit vermischen, **dadurch gekennzeichnet, dass** sie eine Ausrüstung umfasst, die in der Lage ist, Druckluft in den oberen Teil der Säule (11) einzuleiten, um den Pegel des in der Säule (11) enthaltenen Wassers abzusenken, so dass ein Kontakt zwischen dem Wasser und dem Behälter (10) verhindert wird, wobei die Vorrichtung ferner eine Pegelsonde (19) umfasst, die ein Signal über den von dem Wasser in der Säule (11) erreichten Pegel an ein Steuersystem sendet.

2. Vorrichtung nach Anspruch 1, wobei die Säule (11) eine beliebige Form und Größe haben kann, vorzugsweise aus einem zylindrischen Rohr besteht.

3. Vorrichtung nach einem der Ansprüche 1 und 2, **dadurch gekennzeichnet, dass** sich am oberen Ende der Säule (11) eine Muffe (13) befindet, die mit Eingriffsmitteln (14) versehen ist, die es ermöglichen, die Säule (11) mit dem Behälter (10) zu verbinden, der die Produkte enthält, die dem in der Hauptzuleitung des Wasserwerks (12) fließenden Fluid zugesetzt werden sollen.

4. Vorrichtung nach Anspruch 3, **dadurch gekennzeichnet, dass** sich am oberen Ende der Säule (11), eingefügt in die Hülse (13), in dem Teil unmittelbar unterhalb des Behälters (10), ein elektrisch oder manuell gesteuertes Dosierventil (16) befindet.

5. Vorrichtung nach Anspruch 1, wobei die Einrichtung zum Einleiten von Druckluft aus einem Rohr (15) besteht, das parallel zu und in Verbindung mit der Säule (11) angeordnet ist und das die Hauptwasserzufuhrleitung (12) mit dem oberen Ende der Säule (11) unmittelbar stromabwärts des Dosierventils verbindet.

6. Vorrichtung nach Anspruch 5, bei der die Luft unter Ausnutzung des Venturi-Effekts eingeleitet wird.

## Revendications

1. Dispositif pour ajouter des additifs solides dans un circuit hydraulique comprenant un récipient pour lesdits additifs (10), relié à une colonne creuse (11), qui est disposée verticalement et perpendiculairement au circuit d'alimentation de l'installation hydraulique principale (12) et est reliée à celui-ci, avec sa partie inférieure, par des moyens d'engagement appropriés (14), de sorte que lesdits additifs solides descendent par gravité dans ladite colonne (11) et directement vers ou dans ledit circuit d'alimentation de l'installation hydraulique principale (12) où ils se mélangent avec un liquide circulant dans ledit circuit d'alimentation de l'installation hydraulique principale (12), **caractérisé en ce qu'**il comprend un équipement capable d'introduire de l'air sous pression dans la partie supérieure de ladite colonne (11), de manière à abaisser le niveau de l'eau contenue dans ladite colonne (11) afin d'empêcher tout contact entre l'eau et ledit récipient (10), le dispositif comprenant en outre une sonde de niveau (19) envoyant un signal du niveau atteint par ladite eau dans ladite colonne (11) à un système de commande.

2. Dispositif selon la revendication 1, dans lequel ladite colonne (11) peut être de forme et de taille quelconques, de préférence constituée d'un tube cylindrique.

3. Dispositif selon les revendications 1 et 2, dans lequel à l'extrémité supérieure de la colonne (11) se trouve un manchon (13) équipé de moyens d'engagement (14) qui permettent de raccorder la colonne (11) au récipient (10) contenant les produits à ajouter au fluide circulant dans le conduit principal d'alimentation de l'installation hydraulique (12).

4. Dispositif selon la revendication 3, dans lequel au sommet de la colonne (11), inséré dans le manchon (13), dans la partie immédiatement en dessous du récipient (10), se trouve une vanne de dosage (16) commandée électriquement ou manuellement.

5. Dispositif selon la revendication 1, dans lequel ledit équipement pour introduire de l'air sous pression consiste en un tuyau (15), disposé parallèlement à et en communication avec la colonne (11), qui relie le conduit principal d'alimentation en eau (12) au sommet de la colonne (11), immédiatement en aval de la vanne de dosage.

6. Dispositif selon la revendication 5, dans lequel l'air est introduit en exploitant l'effet Venturi.
